Europäisches Patentamt

European Patent Office

Office européen des brevets

(11) Publication number: **0 217 295 B1**

# EUROPEAN PATENT SPECIFICATION

(45) Date of publication of the patent specification:
17.10.90

(21) Application number: 86113223.1

(22) Date of filing: 25.09.86

(51) Int. Cl.⁵: **F16C 17/14, B63H 23/32**

(54) Bearing assembly.

(30) Priority: 02.10.85 US 782785

(43) Date of publication of application:
08.04.87 Bulletin 87/15

(45) Publication of the grant of the patent:
17.10.90 Bulletin 90/42

(84) Designated Contracting States:
DE FR GB SE

(56) References cited:
US-A- 2 389 253
US-A- 2 839 340
US-A- 3 455 613
US-A- 4 473 308

(73) Proprietor: The B.F. GOODRICH Company,
Dept. 0015 WHB-6 500 South Main Street, Akron,
Ohio 44318(US)

(72) Inventor: Kramer, James Harmon, 2793 Erie Drive, Akron
Ohio 44313(US)

(74) Representative: von Kreisler, Alek, Dipl.-Chem. et al,
Deichmannhaus am Hauptbahnhof, D-5000 Köln 1(DE)

## Description

The present invention relates to a bearing assembly according to the preamble of claim 1 and to a method of manufacturing a bearing assembly according to the preamble of claim 7. More particularly the invention relates to an elastomeric journal bearing assembly adapted for use in supporting marine propeller shafts and to a method of fabricating such bearing assembly.

Elastomeric journal bearing have been found to be particularly suited for use in supporting marine propeller shafts because of their ability to withstand the effects of corrosive fluids and to abrasion resulting from bits of foreign materials which are carried in suspension in the sea water or other liquids in which the shaft and journal bearing assembly operate. These types of bearings are also advantageous because of their excellent low friction qualities. Such elastomeric journal bearing assemblies have been made and are still being made with rigid metallic support members but the materials are more expensive and the materials are more expensive and the manufacturing costs are higher. A particular advantage of the elastomeric journal bearings is that since they operate in a liquid medium, they are self lubricated and, therefore, highly desirable for marine use, however, one disadvantage of such bearing is its need for special support.

From US-A 3 455 613, from which claim 1 starts, there is known a composite marine bearing. The known bearing assembly is provided with a cylindrical elastomeric sleeve for receiving the shaft for supporting it for rotation therein. This elastomeric sleeve serving as a bearing sleeve for the shaft is arranged within a metallic reinforcing sleeve for reinforcing the whole bearing assembly. At one end portion of the reinforcing sleeve there is provided a metallic annular flange extending outwardly and provided with an inwardly extending hub. The hub is connected to the end portion of said metallic sleeve by threading or screwing or is pressed onto the outer circumferential surface of the end portion of the metallic sleeve. Furthermore, the flange can be integrally formed with the metallic sleeve, and therefore, needs no hub. The metallic sleeve is surrounded by a fiber reinforced cylindrical rigid plastic shell. This plastic shell is not arranged around the hub, if provided. In the known bearing assembly a metallic reinforcing sleeve is necessary extending along the whole length of the bearing assembly. The material for this reinforcing sleeve is rather expensive. Since further treatments of the hub and the metallic sleeve are necessary in order to connect them to each other or forming the flange and the sleeve integrally with each other is relative expensive, manufacturing costs are rather high.

From US-A 2 389 253 a further bearing assembly is known. This bearing assembly is made in two laterally spaceable parts. Each part includes a semi-cylindrical sleeve portion for receiving and supporting the shaft and a semi-circular end flange portion. The sleeve parts are made of fabric laminations solidly molded together under heat and pressure in a binder of synthetic resin while the end flange portion is made of a metal. Each semi-circular end flange portion is provided with a semi-circular hub portion, the inner surfaces of the hub and the flange portion are counter-bored to form inwardly directed hook-like shoulders, which shoulders penetrate to different depths in the material of the sleeve portion. In this known bearing assembly the inner surface of the flange and hub portion is to be treated so as to provide anchoring means for anchoring the hub and the flange to the sleeve. The treatment on the flange and hub portion is rather expensive so that also in this prior art the manufacturing costs are relatively high.

It is the object of the invention to provide a bearing assembly which, with respect to the materials used in relatively inexpensive and, furthermore, can be manufactured at low production costs.

This object is solved according to the invention by means of the bearing assembly having the features mentioned in claim 1. The steps of manufacturing the bearing assembly according to the invention are mentioned in claim 7. In the subclaims, the features of preferred embodiments of the invention are mentioned.

According to the invention, the hub is provided with an outer circumferential profile tapered radially outwardly from the juncture of said hub and said flange to a circumferentially extending apex spaced from the juncture. To the elastomeric sleeve at least one fiber reinforced elastomeric ply is secured to define a fiber reinforced elastomeric sleeve. Onto one lateral end portion of this sleeve the hub is secured for example by means of an adhesive. The outer circumferential of both the hub and the fiber reinforced elastomeric sleeve are secured to the plastic shell. The connection of the hub to the plastic shell is established upon wrapping the fiber fabric around the hub and the fiber reinforced elastomeric sleeve. The tapered circumferential profile of the hub assures safe connection of the metallic flange to the plastic shell.

The new and improved bearing assembly and the method of manufacturing it each utilize a rigid metallic flange that is integral with the non-metallic parts of the bearing assembly by which is provided the necessary strength for prolonged effective use under demanding conditions while simultaneously utilizing the components of an elastomeric bearing support for the rotating shaft. The invention employs such rigid metal flange by securing it to an inner elastomeric bearing element or sleeve as well as securing it to an outer plastic shell that provides for ease of manufacture while maintaining a low production cost. The present invention provides the needed rigid support while also providing the superior performance of an elastomeric bearing unit yet keeping the manufacturing costs low.

Through the invention a bearing assembly and a method of making it are provided, the metallic flange of the bearing assembly being firmly secured to the non-metallic outer shell which is integral with the cylindrical elastomeric bearing sleeve. According to a preferred embodiment of the invention, the elastomeric sleeve has a plurality of circumferentially spaced bearing elements with water courses therebetween to facilitate the flow of water lubricant to the bearing elements. The bearing assembly is held in its functional position rigidly while permitting ease of replacement.

A preferred embodiment of the invention is hereinbelow described in connection with the drawing in which

Figure 1 is a side elevational view of a strut and bearing assembly for supporting a rotatable shaft in accordance with this invention on the hull of a ship;

Figure 2 is an enlarged cross sectional view of the bearing assembly showing the flange of such bearing assembly connecting the assembly to the housing of the strut;

Figure 3 is a further enlarged fragmentary cross-sectional view of the flange and outer shell integrally connected to an inner elastomeric cylindrical bearing units;

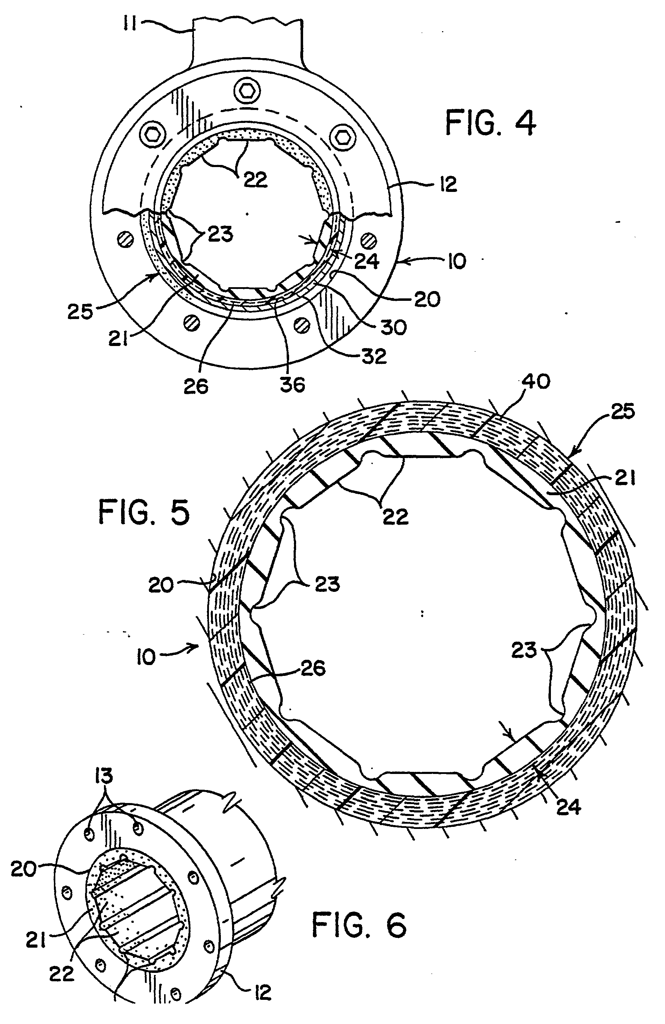

Figure 4 is a front view partly in section taken generally on line 4–4 of Figure 2;

Figure 5 is an enlarged cross sectional view of the bearing assembly taken on line 5–5 of Figure 2;

Figure 6 is an isometric view of the flanged portion of the bearing assembly;

Figure 7 is a diagrammatic view a rubber-fiberglass sleeve on a mandrel with a single overwrap or ply;

Figure 8 is a diagrammatic view of metallic flange and hub positioned for placement on a rubber-fiberglass sleeve of Figure 9;

Figure 9 is a diagrammatic view of a metallic flange on a rubber-fiberglass sleeve that is supported by a mandrel as depicted by Figure 8;

Figure 10 is a diagrammatic view of flange and sleeve of Figure 9 being overwrapped depicting a completed bearing assembly prior to machining to the finished size.

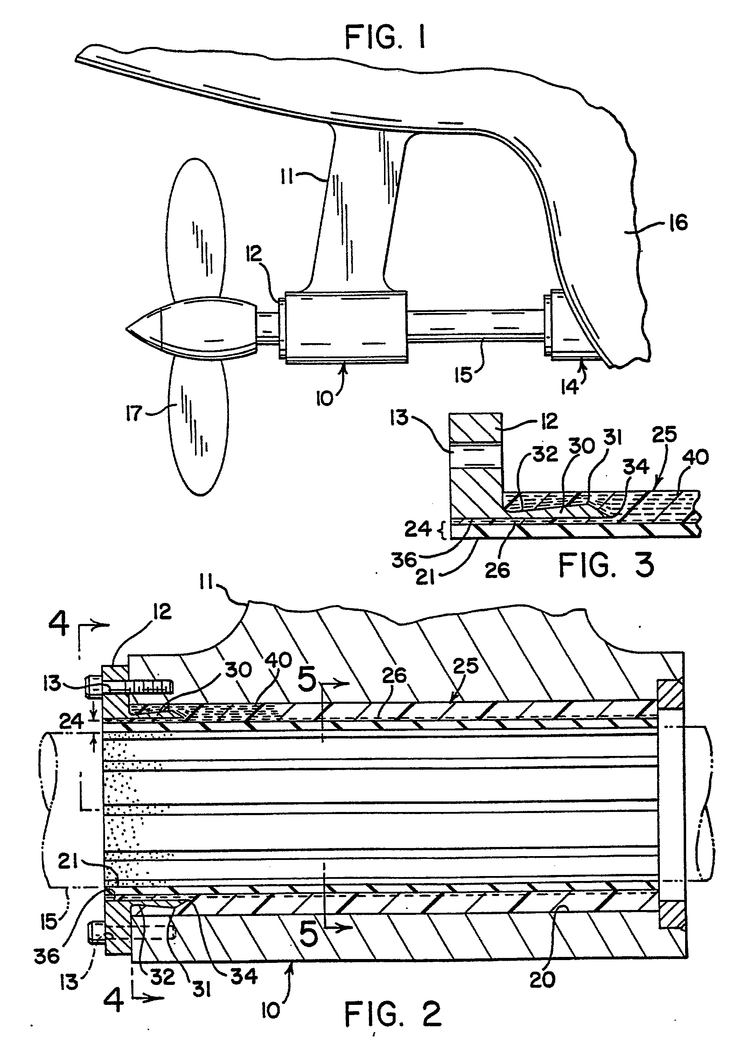

Referring to the drawings, wherein like reference numerals designate like or corresponding parts throughout the several views, there is shown in Figure 1 a longitudinally extending bearing housing 10 supported by a strut 11. A bearing assembly to be described has an annular flanged end section 12, with a plurality of circumferentially spaced bores 13 that receive threaded bolts for securing the bearing assembly and flanged section 12 to the housing 10. A stern housing 14 axially spaced from housing 10 suitably supports a second bearing assembly which in turn supports a shaft 15 that emerges from the ship's hull 16. The shaft 15 has a propeller 17 suitably mounted thereon. The housing 10 has a central bore 20 to accommodate the bearing assembly to be described.

The shaft 15 rotates against a resilient elastomeric or rubber sleeve 21 which can be a cured cylindrical rubber sleeve or a molded resilient vulcanized elastomeric annulus with circumferentially spaced bearing portions 22 (Fig's. 4 and 5) upon which such shaft 15 rotates. Such sleeve 21 also includes a plurality of circumferentially spaced recessed grooves 23 between the bearing portions 22 to facilitate the passage of water through the bearing assembly. Such grooves 23 extend longitudinally of the sleeve 21 in a direction parallel to the axis of the shaft 15. The elastomeric sleeve 21 is suitably secured to an outer rigid cylindrical shell 25 in a manner to be described.

The elastomeric sleeve 21 as shown in Fig's. 7 and 9 has an outer sheet 26 of fabric which may be a single layer as depicted or a multi-layered laminate. Such laminate fabric sheet 26 is woven from reinforcing cords which includes cords, strands, fiberglass, and like thread-like forms which will not corrode or shrink in a liquid environment. Such fabric cords are impregnated in a nitrile rubber solvent cement to form such sheet 26 which may contain suitable crosslinking ingredients to provide the required hardness within the curing conditions that are employed. Such fabric sheet 26 is then bonded to the rubber sleeve 21 to form a single cured integral rubber-fiberglass reinforced sleeve 24 which contains the rubber sleeve 21 with its bearing portions 22, water grooves 23 and the fiberglass reinforced rubber sheet 26.

The elastomeric materials for the rubber sleeve 21 are various conventional nitrile rubber compositions, particularly compositions comprising polymers of butadiene and acrylonitrile where butadiene is the major component of the polymer. Also, natural and other synthetic rubber compositions are possible, provided they have sufficient strength and heat resistance to withstand temporary operation out of the presence of the lubricating liquid such as start-up.

The rubber-fiberglass reinforced sleeve 24 after being cured is mounted on a mandrel 28 which is operatively connected to a suitable power source for rotation in a manner well known in the art.

The annular metal flanged end section 12 is then positioned adjacent one end of the sleeve 21 which is positioned on mandrel 28. The flanged end section 12 can be made from brass, bronze, stainless steel, monel, aluminum or from any other of the various types of ferrous metals. Brass or bronze are particularly useful due to their resistance to corrosion in salt water. In industrial applications and in those instances where electrolysis is a problem, a material is chosen which is the same as or compatible with the material to which the flange is attached.

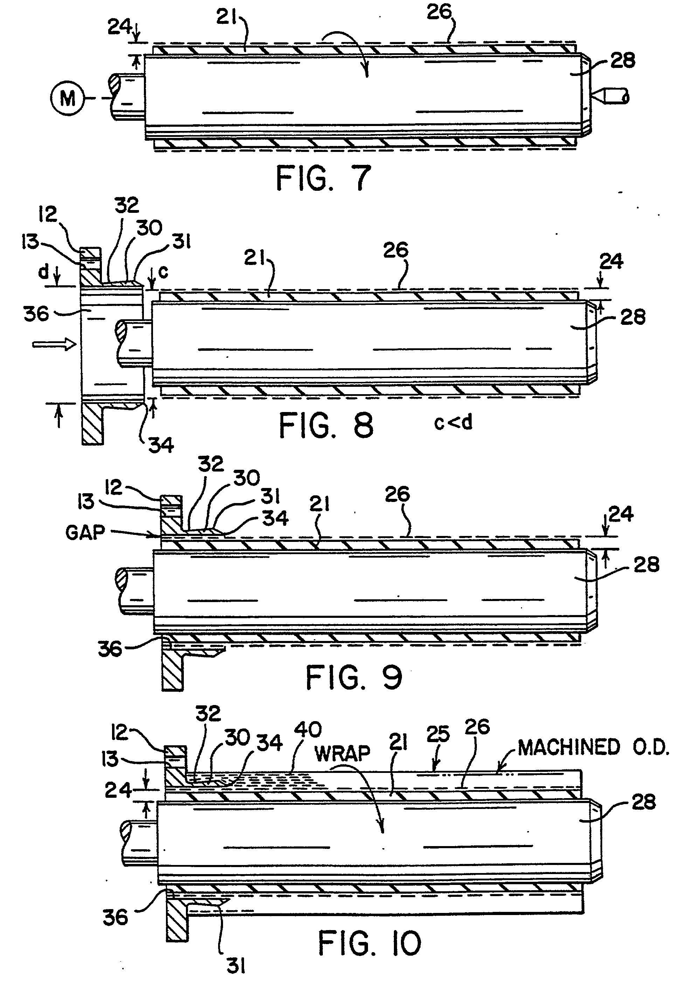

The flanged end section 12 has a hub 30 with a circumferentially extending apex 31 that tapers radially inwardly towards the main body portion of the flanged portion of section 12 producing a necked down portion 32. The hub 30 also tapers radially inwardly from the apex 31 away from the main body portion of the section 12 to a forwardly disposed edge 34. The flanged end section 12 has a central bore 36 slightly greater in diameter than the outside diameter of the fiberglass reinforced rubber sleeve 24 such than an adhesive material such as epoxy is filled into this gap prior to the placement of end section 12 onto the end of rubber-fiberglass reinforced sleeve as seen in Figure 8 to thereby firmly secure the members.

The outer surface of hub 30 of the flanged end section 14 may be knurled or grooved such that when overwrapped with plies impregnated with fiberglass material the hub is firmly secured and will not move relative to the other parts of the bearing assembly.

With the flanged end section 12 firmly secured to the rubber-fiberglass sleeve 24 as described above, the sleeve 24 and mandrel 28 are then rotated while a woven fabric of fiberglass is wrapped onto the outer periphery of the hub 30 and the rubber-fiberglass reinforced sleeve 24 while the fabric is coated with an epoxy resin. The fiberglass fabric and resin may be applied manually or by any known mechanical means. The number of layers of impregnated fiberglass fabric 40 that is applied around the outer surface of the sleeve 24 and hub 30 is determined by the desired size needed for a specific application. The finished product after winding and the curing of the epoxy resin may be machined to the desired finished diameter.

A specific example of the epoxy resin useful in the present invention is one by the trade name "APCO" available from Applied Plastics Company, Inc. of 612 Franklin Avenue, El Segundo, California 90245. The epoxy resin has a specific gravity of 1.165 and its accompanying curing agent or hardner has a specific gravity of 1.809. The epoxy resin has a Shore D 25°C hardness of 84 with a glass transition temperature of 196°F. The viscosity of the epoxy resin is 2000 cps (1800 ± 300); while the viscosity of the hardner is 410 cps (310 ± 200).

The fiberglass fabric for the overwrapping of the fiberglass reinforced rubber sleeve 21 may be supplied from a storage roll suitably supported on a shaft such that as the mandrel 28 is rotated the fiberglass fabric is fed to the sleeve 24 to facilitate the winding operation. To effect the curing of the wrapped fiberglass and epoxy resin, the mandrel 28 is slowly rotated until cure of the epoxy resin is effected providing the outer rigid cylindrical fiberglass reinforced plastic shell 25.

The unique combination of the flange's hub 30 and its firm connection to the fiberglass reinforced rubber sleeve 24 as well as to the overwrapped fiberglass reinforced plastic (epoxy) shell 25 prevents the flange from rotating and being pulled out of the finished bearing assembly. To insure greater strength between these parts, the hub may be cemented at its tapering surfaces to the fiberglass reinforced plastic shell 25 as well as to the rubber-fiberglass reinforced sleeve 24.

Such method of fabricating a bearing assembly as described above is efficient and cost effective while providing the advantage of a metallic flange support integral with a non-metallic bearing assembly.

## Claims

1. Bearing assembly, comprising
- a cylindrical elastomeric sleeve (21) for receiving a shaft (15) and for supporting said shaft (15) for rotation therein,
- a metallic annular flange (12) with an inwardly extending hub (30) surrounding one end portion of said elastomeric sleeve (21), and
- a fiber reinforced cylindrical rigid plastic shell (25) arranged around said elastomeric sleeve (21), characterized in that,
- at least one fiber reinforced elastomeric ply (26) is secured to said elastomeric sleeve (21) to define a fiber reinforced elastomeric sleeve (24),
- said hub (30) is secured to one end portion of said fiber reinforced elastomeric sleeve (24),
- said hub (30) is provided with an outer circumferential profile tapered radially outwardly from the juncture of said hub (30) and said flange (12) to a circumferentially extending apex (31) spaced from the juncture, and
- said plastic shell (25) overlies and thereby is secured to said hub (30) and said fiber reinforced elastomeric sleeve (24).

2. Bearing assembly according to claim 1, characterized in that said hub (30) has an outer serrated surface (31) that is secured to said plastic shell (25).

3. Bearing assembly according to claim 1 or 2, characterized in that said outer circumferential surface of said hub (30) tapers radially inwardly from said apex (31) to an outer edge (34).

4. Bearing assembly according to anyone of claims 1 to 3, characterized in that said hub (30) and flange (12) have a central bore (36) defining an inner surface that is bonded to said one end portion of said fiber reinforced elastomeric sleeve (24).

5. Bearing assembly according to anyone of claims 1 to 4, characterized in that said cylindrical elastomeric sleeve (24) has a plurality of circumferentially spaced bearing portions (22) separated by longitudinally extending lubricant passages (23).

6. Bearing assembly according to anyone of claims 1 to 5, characterized in that the outer periphery of said flanged hub (30) has a plurality of circumferentially spaced bores (13) for securing said flanged hub (30) to said housing (10).

7. Method of manufacturing a bearing assembly comprising the steps of
- preforming a generally cylindrical elastomeric sleeve (24),
- providing at least a ply of fiber reinforced elastomer onto said elastomeric cylindrical sleeve (21) to provide a fiber reinforced cured elastomeric bearing sleeve (24),
- mounting said bearing sleeve (24) onto a rotatable mandrel (28),
- applying an adhesive onto one exterior end surface of said bearing sleeve (24),
- providing a metallic annular flange (12) with in inwardly extending hub (30),
- tapering radially outwardly the outer circumferential from the juncture of said hub (30) and said flange (12) to a peripheral apex (31),
- mounting said annular flange (12) with said hub (30) onto said one exterior surface of said bearing sleeve (24) into frictional contact with said adhesive,
- rotating said mandrel (28) and wrapping a fiber fabric onto the outer circumferential surfaces of said bearing sleeve (24) and said hub (30) while impregnating the fiber fabric with a plastic resin, and
- curing said resin to complete a fiber reinforced shell (25) that is molded into firm engagement with

said hub (30) and said bearing sleeve (24).

8. Method according to claim 7, characterized in that the outer surface of said hub (30) is serrated prior to mounting onto said bearing sleeve (24).

9. Method according to claim 7 or 8, characterized in that said outer circumferential surface of said hub is tapered radially inwardly from said apex (31) to an outer edge (34) spaced form said flange (12) prior to mounting onto said bearing sleeve (24).

10. Method according to anyone of claims 7 to 9, characterized in that said outer shell (25) is sized to a finished diameter.

11. Method according to anyone of claims 7 to 10, characterized in that an adhesive is applied to said outer circumferential surface of said hub (30) prior to the wrapping of said fiber fabric onto said hub (30).

## Patentansprüche

1. Lageranordnung mit
– einer zylindrischen elastomeren Hülse (21) zum Aufnehmen einer Welle (15) und zum Halten der Welle (15) zur Drehung in dieser,
– einem metallischen Ringflansch (12) mit einer sich einwärts erstreckenden Nabe (30), die einen Endabschnitt der elastomeren Hülse (12) umgibt, und
– einer faserverstärkten zylindrischen starren Kunststoffschale (25), die um die elastomere Hülse (21) angeordnet ist, dadurch gekennzeichnet, daß
– zur Bildung einer faserverstärkten elastomeren Hülse (24) wenigstens eine faserverstärkte elastomere Lage (26) an der elastomeren Hülse (21) befestigt ist,
– die Nabe (30) an einem Endabschnitt der faserverstärkten elastomeren Hülse (24) befestigt ist,
– die Nabe (30) mit einem äußeren Umfangsprofil versehen ist, das von der Verbindungsstelle der Nabe (30) und des Flansches (12) radial nach außen zu einem sich umfangsmäßig erstreckenden, von der Verbindungsstelle beabstandeten Scheitel (31) angeschrägt ist, und
– die Kunststoffschale (25) über der Nabe (30) liegt und dadurch mit dieser und der faserverstärkten elastomeren Hülse (24) verbunden ist.

2. Lageranordnung nach Anspruch 1, dadurch gekennzeichnet, daß die Nabe (30) eine äußere gezahnte Oberfläche aufweist, die an der Kunststoffschale (25) befestigt ist.

3. Lageranordnung nach Anspruch 1 oder 2, dadurch gekennzeichnet, daß die äußere Umfangsfläche der Nabe (30) von dem Scheitel (31) radial einwärts zu einer Außenkante (34) angeschrägt ist.

4. Lageranordnung nach einem der Ansprüche 1 bis 3, dadurch gekennzeichnet, daß die Nabe (30) und der Flansch (12) eine Mittelbohrung (36) aufweisen, die eine Innenfläche bildet, welche mit dem einen Endabschnitt der faserverstärkten elastomeren Hülse (24) verbunden ist.

5. Lageranordnung nach einem der Ansprüche 1 bis 4, dadurch gekennzeichnet, daß die zylindrische elastomere Hülse (24) mehrere umfangsmäßig beabstandete Lagerbereiche (22) aufweist, die durch sich in Längsrichtung erstreckende Schmierkanäle (23) getrennt sind.

6. Lageranordnung nach einem der Ansprüche 1 bis 5, dadurch gekennzeichnet, daß der Außenrand der mit einem Flansch versehenen Nabe (30) mehrere umfangsmäßig beabstandete Bohrungen (13) zum Befestigen der mit einem Flansch versehenen Nabe (30) an dem Gehäuse (10) aufweist.

7. Verfahren zur Herstellung einer Lageranordnung mit den folgenden Schritten:
– Vorformen einer im wesentlichen zylindrischen elastomeren Hülse (21),
– Anordnen wenigstens einer Lage faserverstärkten Elastomers auf der zylindrischen elastomeren Hülse (21), um eine faserverstärkte gehärtete elastomere Lagerhülse (24) zu bilden,
– Anbringen der Lagerhülse (24) auf einem drehbaren Dorn (28),
– Aufbringen eines Klebemittels auf einer äußeren Endfläche der Lagerhülse (24),
– Vorsehen eines metallischen Ringflansches (12) mit einer sich einwärts erstreckenden Nabe (30),
– Anschrägen des Außenumfangs radial einwärts von der Verbindung der Nabe (30) und des Flansches (12) zu einem Umfangsscheitel (31) hin,
– Anbringen des Ringflansches (12) mit der Nabe (30) auf der einen Außenfläche der Lagerhülse (24) in Reibkontakt mit dem Klebemittel,
– Drehen des Dornes (28) und Wickeln eines Fasergewebes auf die äußeren Umfangsflächen der Lagerhülse (24) und der Nabe (30), während das Fasergewebe mit einem Kunststoffharz imprägniert wird, und
– Härten des Harzes zur Fertigstellung einer faserverstärkten Schale (25), die in festen Zusammengriff mit der Nabe (30) und der Lagerhülse (24) geformt wird.

8. Verfahren nach Anspruch 7, dadurch gekennzeichnet, daß die Außenfläche der Nabe (30) vor dem Anbringen auf der Lagerhülse (24) gezahnt wird.

9. Verfahren nach Anspruch 7 oder 8, dadurch gekennzeichnet, daß die äußere Umfangsfläche der Nabe vor dem Anbringen auf der Lagerhülse (24) von dem Scheitel (31) radial nach innen zu einer Außenkante (34) angeschrägt wird, die von dem Flansch (12) beabstandet ist.

10. Verfahren nach einem der Ansprüche 7 bis 9, dadurch gekennzeichnet, daß die äußere Schale (25) auf einen endgültigen Durchmesser gebracht wird.

11. Verfahren nach einem der Ansprüche 7 bis 10, dadurch gekennzeichnet, daß vor dem Anbringen des Fasergewebes auf der Nabe (30) ein Klebemittel auf der äußeren Umfangsfläche der Nabe (30) aufgebracht wird.

## Revendications

1. Assemblage de palier, comprenant:
– un manchon cylindrique, élastomère (21) pour recevoir un arbre (15) et pour supporter ledit arbre (15) afin qu'il tourne à l'intérieur de celui-ci,

– un flasque métallique annulaire (12) avec un moyeu s'étendant vers l'intérieur (30) entourant une partie d'extrémité dudit manchon élastomère (21), et

– un chemisage cylindrique en matière plastique rigide renforcée par des fibres (25) disposé autour dudit manchon élastomère (21), caractérisé en ce que,

– au moins une couche élastomère renforcée par des fibres (26) est fixée audit manchon élastomère (21) pour délimiter un manchon élastomère renforcé par des fibres (24),

– ledit moyeu (30) est fixé à une partie d'extrémité dudit manchon élastomère renforcé par des fibres (24),

– ledit moyeu (30) présente un profil circonférentiel externe se rétrécissant radialement vers l'extérieur à partir de la jonction dudit moyeu (30) et dudit flasque (12) vers un sommet s'étendant circonférentiellement (31) espacé de ladite jonction, et

– ledit chemisage en matière plastique (25) recouvre et est donc fixé audit moyeu (30) et audit manchon élastomère renforcé par des fibres (24).

2. Assemblage de palier selon la revendication 1, caractérisé en ce que ledit moyeu (30) a une surface extérieure striée qui est fixée audit chemisage en matière plastique (25).

3. Assemblage de palier selon la revendication 1 ou 2, caractérisé en ce que ladite surface circonférentielle extérieure dudit moyeu (30) est dirigée en se rétrécissant radialement vers l'intérieur à partir dudit sommet (31) vers un bord extérieur (34).

4. Assemblage de palier selon l'une quelconque des revendications 1 à 3, caractérisé en ce que ledit moyeu (30) et le flasque (12) ont un trou central (36) délimitant une surface intérieure qui est collée à ladite partie d'extrémité dudit manchon élastomère renforcé par des fibres (24).

5. Assemblage de palier selon l'une quelconque des revendications 1 à 4, caractérisé en ce que ledit manchon élastomère cylindrique (24) a une pluralité de parties de palier espacées circonférentiellement (22) séparées par des passages pour le lubrifiant s'étendant longitudinalement (23).

6. Assemblage de palier selon l'une quelconque des revendications 1 à 5, caractérisé en ce que la périphérie extérieure dudit moyeu à flasque (30) a une pluralité de trous espacés circonférentiellement (13) pour fixer ledit moyeu à flasque (30) audit carter (10).

7. Procédé de fabrication d'un assemblage de palier consistant dans les étapes suivantes:

– on préforme un manchon élastomère généralement cylindrique (21),

– on prévoit au moins une couche d'élastomère renforcé par des fibres sur ledit manchon cylindrique élastomère (21) pour obtenir un manchon de palier élastomère durci renforcé par des fibres (24),

– on monte ledit manchon de palier (24) sur un mandrin rotatif (28),

– on applique un adhésif sur l'une des surfaces d'extrémité extérieure dudit manchon de palier (24),

– on prévoit un flasque métallique annulaire (12) avec un moyeu s'étendant à l'intérieur de celui-ci (30),

– on forme en pointe radialement vers l'extérieur la circonférence extérieure à partir de la jonction dudit moyeu (30) et dudit flasque (12) vers un sommet périphérique (31),

– on monte ledit flasque annulaire (12) avec ledit moyeu (30) sur ladite surface extérieure dudit manchon de palier (24) en contact de frottement avec ledit adhésif,

– on fait tourner ledit mandrin (28) et on enroule un tissu de fibres sur les surfaces circonférentielles extérieures dudit manchon de palier (24) et dudit moyeu (30) tout en imprégnant le tissus de fibres avec une résine plastique,

– et on fait durcir ladite résine pour terminer un chemisage renforcé par des fibres (25) qui est moulé en venant fermement en prise avec ledit moyeu (30) et ledit manchon de palier (24).

8. Procédé selon la revendication 7, caractérisé en ce que la surface extérieure dudit moyeu (30) est striée avant d'être montée sur ledit manchon de palier (24).

9. Procédé selon la revendication 7 ou 8, caractérisé en ce que ladite surface circonférentielle extérieure dudit moyeu est dirigée en se rétrécissant radialement vers l'intérieur à partir dudit sommet (31) vers un bord extérieur (34) espacé dudit flasque (12) avant d'être montée sur ledit manchon de palier (24).

10. Procédé selon l'une quelconque des revendications 7 à 9, caractérisé en ce que ledit chemisage extérieur (25) est dimensionné à un diamètre fini.

11. Procédé selon l'une quelconque des revendications 7 à 10, caractérisé en ce qu'un adhésif est appliqué à ladite surface circonférentielle extérieure dudit moyeu (30) avant l'enroulement dudit tissu de fibres sur ledit moyeu (30).

# FIG. 1

# FIG. 3

# FIG. 2

FIG. 4

FIG. 5

FIG. 6

FIG. 7

FIG. 8      c<d

FIG. 9

FIG. 10